(19) **Europäisches Patentamt / European Patent Office / Office européen des brevets**

(11) **EP 1 640 744 B1**

(12) **EUROPEAN PATENT SPECIFICATION**

(45) Date of publication and mention
of the grant of the patent:
**14.01.2009 Bulletin 2009/03**

(51) Int Cl.:
***G01S 15/89*** *(2006.01)* ***G01S 7/521*** *(2006.01)*

(21) Application number: **05019570.0**

(22) Date of filing: **08.09.2005**

(54) **Ultrasonic diagnostic apparatus with low voltage switch in the receive channel**

Diagnostisches Ultraschallgerät mit Niederspannungs-Schalter im Empfangskanal

Système diagnostique à ultrasons avec commutateur basse tension

(84) Designated Contracting States:
**DE**

(30) Priority: **22.09.2004 JP 2004275684**

(43) Date of publication of application:
**29.03.2006 Bulletin 2006/13**

(73) Proprietors:
- **KABUSHIKI KAISHA TOSHIBA**
  **Tokyo (JP)**
- **Toshiba Medical Systems Corporation**
  **Otawara-shi,**
  **Tochigi-ken (JP)**

(72) Inventor: **Kameishi, Wataru,**
**Toshiba Medical Systems Corp.**
**Otawara-shi,**
**Tochigi 324-8550 (JP)**

(74) Representative: **Kramer - Barske - Schmidtchen**
**European Patent Attorneys**
**Landsberger Strasse 300**
**80687 München (DE)**

(56) References cited:
**US-A- 4 253 338**   **US-A- 6 050 945**
**US-A- 6 104 670**

- **PATENT ABSTRACTS OF JAPAN vol. 1996, no. 09, 30 September 1996 (1996-09-30) -& JP 08 131440 A (OLYMPUS OPTICAL CO LTD), 28 May 1996 (1996-05-28)**
- **PATENT ABSTRACTS OF JAPAN vol. 2000, no. 13, 5 February 2001 (2001-02-05) -& JP 2000 296128 A (GE YOKOGAWA MEDICAL SYSTEMS LTD), 24 October 2000 (2000-10-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to an ultrasonic diagnostic apparatus, which acquires information inside a subject by transmitting an ultrasonic signal to the subject and receiving a reflective wave to analyze.

2. Description of the Related Art

An ultrasonic diagnostic apparatus is an apparatus which acquires information of a living body such as blood flow information or a topographic image inside a subject by applying ultrasonic pulses from piezoelectric transducers built in an ultrasonic probe into the subject and receiving reflected waves generated in the subject with the piezoelectric transducers to subject the reflected waves received to some kinds of processing.

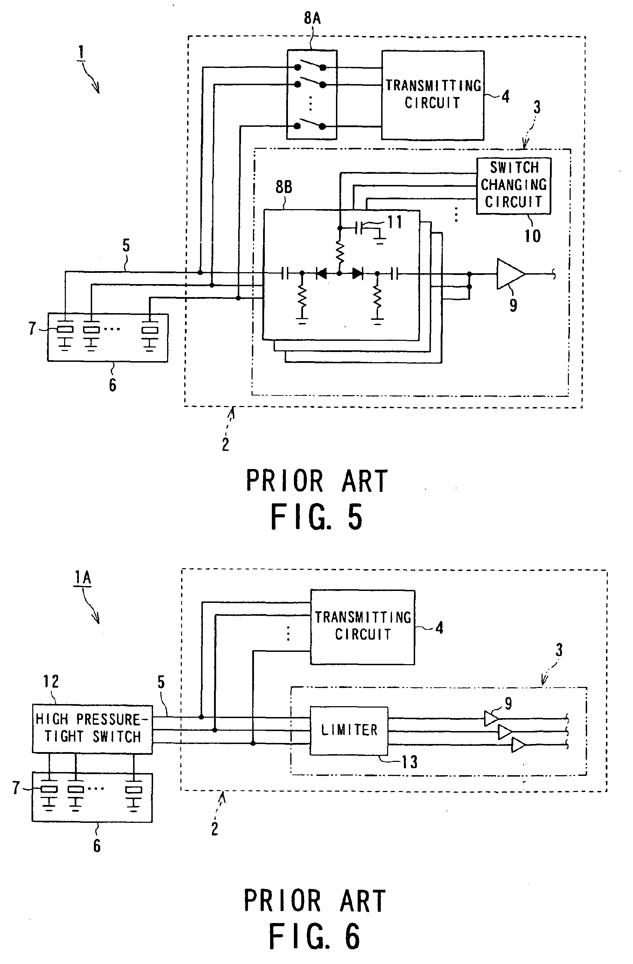

Fig. 5 is a block diagram showing an example of a conventional ultrasonic diagnostic apparatus (see, for example, Japanese Patent Application (Laid-Open) No.8-131440).

A known ultrasonic diagnostic apparatus 1 shown in Fig. 5 has a structure in which its apparatus main body 2 includes a receiving circuit 3 and a transmitting circuit 4, and the receiving and transmitting circuits 3 and 4 are connected to a common ultrasonic probe 6 via signal lines 5. The ultrasonic probe 6 generally includes about 60 to about 200 piezoelectric transducers 7.

The ultrasonic probe 6 has a plurality of the signal lines 5 connected thereto in accordance with the number of the piezoelectric transducers 7. That is, one end of each signal line 5 is connected to the corresponding one of the piezoelectric transducers 7 and the other end thereof is branched into two lines so as to extend to the receiving and transmitting circuits 3 and 4, respectively.

One part of the signal line 5 branched from the ultrasonic probe 6 and extending to the transmitting circuit 4 has a high-voltage-proof switch 8A disposed thereon so as to transmit a transmitting signal from the transmitting circuit 4 common to a plurality of the piezoelectric transducers 7.

Likewise, the other part of the signal line 5 branched from the ultrasonic probe 6 and extending to the receiving circuit 3 has a corresponding one of diode switches 8B disposed thereon. The other ends of the diode switches 8B are respectively connected to a preamp 9. Thus, reception signals from the plurality of piezoelectric transducers 7 are received by the common receiving circuit 3.

Each diode switch 8B is connected to a switch (SW)-selecting circuit 10 and serves as a switch by selecting biased states of its diodes on the basis of a switch-selecting signal from the SW-selecting circuit 10. The diode switch 8B includes a bypass capacitor 11 introducing an excessive current to the ground.

Meanwhile, some ultrasonic diagnostic apparatuses have a structure in which receiving and transmitting circuits 3 and 4 are exclusively connected to each of the piezoelectric transducers 7 without the high-voltage-proof switch 8A.

In the known ultrasonic diagnostic apparatus 1 shown in Fig. 5, a channel for a transmitting signal and the corresponding piezoelectric transducer 7 are selected in accordance with an open-close operation of the corresponding high-voltage-proof switch 8A, and the transmitting signal from the transmitting circuit 4 is applied on the selected piezoelectric transducer 7 in the ultrasonic probe 6 via the corresponding signal line 5 in a form of an electric pulse. With this, the piezoelectric transducer 7 is driven so as to transmit an ultrasonic signal to a subject. Since a reflective wave is generated in the subject, the piezoelectric transducer 7 receives it, converts it into an electrical signal, and feeds the electrical signal to the receiving circuit 3 as a reception signal. Thus, the reception signal is received in the apparatus main body 2.

While a transmitting signal has an example voltage amplitude (hereinafter, simply referred to as an amplitude) of several hundreds Vpp at the maximum and a frequency in the range from 1 MHz to about more than a dozen MHz in order that an ultrasonic signal having a sufficient signal intensity is transmitted from the piezoelectric transducer 7 to the subject and the piezoelectric transducer 7 receives its reflective wave having a sufficient intensity, the piezoelectric transducer 7 has a transducer impedance in the range from 10 Ω to several hundreds Ω. In other words, the transmitting signal is provided in a form of power in order to feed sufficient oscillation energy to the piezoelectric transducer 7.

With such conditions of the transmitting signal, reception signals, each having a noise level of about 1 to about 2 nV/rtHz and an amplitude from the noise level to several tens mVpp, are obtained.

The reception signals received at the receiving circuit 3 are introduced to the corresponding diode switch 8B. Then, a switch-selecting signal is provided from the SW-selecting circuit 10 to the diode switch 8B, and one of the reception signals of a channel selected by driving the diode switch 8B is provided to the preamp 9. The reception signal provided to the preamp 9 as described above is amplified and fed to a control system (not shown) in a subsequent stage so as to serve as original data for obtaining information about structures, blood flow, and so forth in the subject.

In other words, the known ultrasonic diagnostic apparatus 1 shown in Fig. 5 has a structure in which the number of the receiving and transmitting circuits 3 and 4 is reduced by transmitting a transmitting signal having a large amplitude and by receiving a reception signal having a small amplitude through selection, respectively, with the aid of the high-voltage-proof switch 8A and the diode switch 8B having a small ON resistance.

Fig. 6 is a block diagram showing another example of a conventional ultrasonic diagnostic apparatus.

Similar to the known ultrasonic diagnostic apparatus 1 shown in Fig. 5, a known ultrasonic diagnostic apparatus 1A shown in Fig. 6 has a structure in which its apparatus main body 2 has the receiving and transmitting circuits 3 and 4 disposed therein and connected to the common ultrasonic probe 6 via the signal lines 5.

The ultrasonic probe 6 has a plurality of the signal lines 5 in accordance with the number of the piezoelectric transducers 7. That is, one end of each signal line 5 is connected to the corresponding piezoelectric transducer 7, and the other end thereof is branched into two lines so as to extend to the receiving and transmitting circuits 3 and 4, respectively.

While one part of the signal line 5 close to the ultrasonic probe 6 commonly used for transmitting and reception signals has a high-voltage-proof switch 12 disposed thereon, the other part of the signal line 5 branched from the ultrasonic probe 6 and extending to the receiving circuit 3 has a limiter 13 disposed thereon.

In the known ultrasonic diagnostic apparatus 1A shown in Fig. 6, channels of transmitting and reception signals are selected by driving the corresponding high-voltage-proof switch 12 common to channel selection thereof. While a transmitting signal from the transmitting circuit 4 is provided to the piezoelectric transducer 7 via the high-voltage-proof switch 12, a reception signal from the piezoelectric transducer 7 is provided to the preamp 9 in the receiving circuit 3 via the high-voltage-proof switch 12 and limiter 13.

On this occasion, the limiter 13 limits a transmitting signal having a large amplitude so as to prevent it from flowing in the preamp 9.

As shown in Figs. 5 and 6, in each of the known ultrasonic diagnostic apparatuses 1 and 1A, since a signal channel is selected by the corresponding switch, the number of the receiving and transmitting circuits 3 and 4 is smaller than that of the piezoelectric transducers 7.

In this case, the switch is required to have characteristics of, for example, a low capacitance, a low ON resistance, high OFF-isolation (a high OFF-resistance), a short switching time, high voltage proof at points through which transmitting signal passes , easy arrangement, a small package (high density package), in addition to being inexpensive.

Unfortunately, the known ultrasonic diagnostic apparatus 1 shown in Fig. 5 and including the diode switches 8B has the following problems.

The first problem is a long switching time. That is, the diode switch 8B is needed to include the bypass capacitor 11 every channel of a reception signal. If the bypass capacitor 11 is not provided, there is a risk that a spike current cause of a transmitting signal or a control signal from the SW-selecting circuit 10 flows into a substrate, causing a malfunction or mixing noises into other channels.

Accordingly, the known ultrasonic diagnostic apparatus 1 must be equipped with the bypass capacitors 11. Meanwhile, in an example case where the SW-selecting circuit 10 has an output impedance of 10 $\Omega$ and each bypass capacitor 11 has a capacitance of 0.1 $\mu$F, the time constant of the apparatus upon selecting the corresponding diode switch 8B is a magnitude given by: 10 $\Omega$ x 0.1 $\mu$F = 10 $\mu$sec. Hence, the period of the apparatus needed to return its original state upon actually selecting the corresponding diode switch 8B is about 100 $\mu$sec, which is about ten times of the time constant.

In the case where the number of receiving channels is smaller than that of the piezoelectric transducers 7 provided in the ultrasonic probe 6, an ultrasonic image is generated by sequentially selecting the receiving channels and scanning the selected one. Hence, a reception signal is received during an example time period of about 67 $\mu$sec (at a frequency 15 kHz) and, after changing the receiving channels, received through another receiving channel.

In other words, a short period of time needed for selecting the receiving channel is important, and its practical level is about 10 $\mu$sec. On the contrary, selecting the receiving channel by the diode switch 8B requires a time period of about 100 $\mu$sec, which is too long and unpractical.

When the receiving channel is imperfectly selected, a clamp voltage and an impedance of the diode switch 8B vary, and in particular, a Doppler image obtained by processing an image on the basis of a time variance of a reception signal has a serious problem of artifact generation.

The second problem is poor OFF-isolation.

When the voltage of a transmitting signal becomes lower than the ground (GND) voltage level, for example, when bipolar transmission is performed or undershoot is generated, the diode switch 8B is turned on. After then, when the voltage of the transmitting signal becomes higher than the GND voltage level, the diode switch 8B allows the transmitting signal to pass therethrough during its reverse recovery time period.

Even when the voltage of the transmitting signal does not become lower than the GND voltage level, the diode switch 8B has a parasitic capacitance. Since a waveform of the transmitting signal has a large amplitude of about 200 V and a rapid rise and fall, the signal is likely to pass through the diode switch 8B. Passing of the transmitting signal through the diode switch 8B causes saturation of the preamp 9 and artifact on an ultrasonic image to occur.

The third problem is a variance in a reception signal.

Upon bringing the diode switch 8B into an ON state, a forward voltage is applied on each of its diodes. In order to bring the typical diode switch 8B into an ON state, it is needed to apply a voltage of about 0.7 V on the diode. This characteristic causes the bias point of the diode switch 8B to vary depending on its OFF state and ON state.

Hence, the diode switch 8B has a capacitor inserted on the reception signal line so as to serve as an AC coupling. The capacitor constituting the AC coupling is required to have a large capacitance in order to reduce the insert loss.

Since a small resistance of each of resistors disposed in the diode switch 8B causes a current noise to occur and affect on an ultrasonic image as NF (Noise Figure) , the resistor has a large resistance to some extent.

With this, the recovery time of the bias point of the diode switch 8B has a larger time constant upon selecting the OFF or the ON state of the diode switch 8B, thereby leading to a longer recovery time of the bias point. In other words, when the state of the diode switch 8B is switched over from the OFF to the ON state, in order to recover the bias point to its originally expected the value, the AC coupling-use capacitor having a large capacitor must be charged with a current fed from the SW-selecting circuit 10 via the corresponding resistor having a relatively large resistance and the corresponding diode, thereby requiring a long time before achieving the stable bias point.

The known ultrasonic diagnostic apparatus 1A shown in Fig. 6, including the high-voltage-proof switches 12 common to transmitting and reception signals has the following problems.

The first problem is such that each of the high-voltage-proof switches 12 for switching over the receiving and transmitting signals from each other does not satisfy both high-voltage-proof OFF-isolation and a low ON resistance since these are mutually contradictory characteristics. For example, the high-voltage-proof switch 12 capable of resisting a transmitting signal having an amplitude of about 200 Vpp to about 300 Vpp has a large ON resistance as large as about 30 Ω to about 50 Ω.

The second problem is a large input-output terminal capacitance of the high-voltage-proof switch 12. The high-voltage-proof switch 12 has the input-output terminal capacitance of about 40 pF, serving as a capacitance load connected to the corresponding transmitting and reception signal line, resulting in a large influence as NF.

Third problem is generation of artifact on an ultrasonic image, caused by a switching-noise of the high-voltage-proof switch 12. More particularly, when the switching noise of the high-voltage-proof switch 12 is mixed in the transmitting and receiving line, the mixed noise causes the corresponding transducer to oscilate as if serving as a transmitting signal, whereby artifact appears on the ultrasonic image as if ultrasonic transmission is transmitted at a different timing from the expected one.

The fourth problem is a requirement of a high power-supply voltage for driving the high-voltage-proof switch 12. More particularly, since the high-voltage-proof switch 12 is required to allow a transmitting signal having an amplitude of about 200 Vpp to about 300 Vpp to pass therethrough, the voltage of the power supply for driving the high-voltage-proof switch 12 must be higher than the above-mentioned values. This causes an increased number of types of power supplies and a requirement of safety equipment such as a power supply supervisory-mechanism, thereby leading to the expensive ultrasonic diagnostic apparatus 1A.

US 4 253 338 discloses an apparatus according to the preamble of claim 1.

SUMMARY OF THE INVENTION

Accordingly, the present invention has been made in light of the conventional situations, and it is an object of the present invention to provide an ultrasonic diagnostic apparatus which make it possible to change channels of reception signals transmitted between the piezoelectric transducers transmitting and receiving ultrasonic waves and a receiving circuit with a switch structure which has the better characteristic.

This is achieved by the present invention as defined in claim 1. Further advantageous embodiments are defined in the sub-claims.

BRIEF DESCRIPTION OF THE DRAWINGS

In the accompanying drawings:

Fig. 1 is a block diagram showing an ultrasonic diagnostic apparatus according to a first embodiment of the present invention;

Fig. 2 is a circuit diagram showing an example circuit structure of the limiter of the ultrasonic diagnostic apparatus shown in Fig. 1;

Fig. 3 is a diagram showing a simplified equivalent circuit model indicating a reception system including the receiving circuit of the ultrasonic diagnostic apparatus shown in Fig. 1;

Fig. 4 is a block diagram showing an ultrasonic diagnostic apparatus according to a second embodiment of the present invention;

Fig. 5 is a block diagram showing an example of a conventional ultrasonic diagnostic apparatus; and

Fig. 6 is a block diagram showing another example of a conventional ultrasonic diagnostic apparatus.

DESCRIPTION OF THE PREFERRED EMBODIMENTS

An ultrasonic diagnostic apparatus according to embodiments of the present invention will be described with reference to the accompanying drawings.

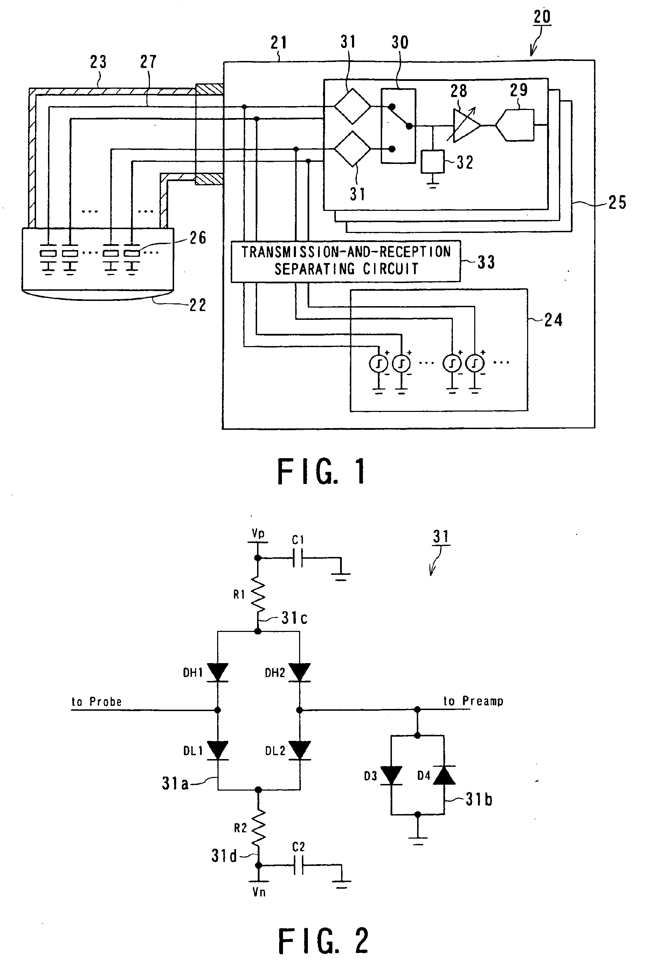

Fig. 1 is a block diagram showing an ultrasonic diagnostic apparatus according to a first embodiment of the present invention.

An ultrasonic diagnostic apparatus 20 includes an apparatus main unit 21 and an ultrasonic probe 22 connected each other through a probe cable 23. The apparatus main unit 21 includes a transmitting circuit 24 and receiving circuits 25. The input side of the transmitting circuit 24 and the each output side of the receiving circuits 25 are connected to a control system (not shown) respectively.

The ultrasonic probe 22 generally includes about 60 to about 200 piezoelectric transducers 26 (ultrasonic transducers). Each of the piezoelectric transducers 26 is connected to one end of a corresponding one of signal lines 27, and the other end of the signal line 27 is branched into two lines; one extending to the transmitting circuit 24 and the other extending to a corresponding one of receiving circuits 25. The signal lines 27 extending between the apparatus main unit 21 and the piezoelectric transducers 26 are protected by an insulator so as to constitute the probe cable 23.

The ultrasonic probe 22 has the function to convert a transmission signals given from the transmitting circuit 24 to an ultrasonic wave signals to transmit a subject (not shown) using the piezoelectric transducers 26 and the function to receive reflected waves generated to a cause that the ultrasonic wave signals reflected in organs, such as internal organs and blood vessels inside the subject and to convert the received reflected waves to electric signals to give to the receiving circuit 25 as reception signals.

Each of the piezoelectric transducers 26 can generate necessary oscillation energy which make it possible to transmit an ultrasonic signal having a sufficient signal intensity into a subject to receive a reflective wave having a sufficient signal intensity, such as a reflective wave having a signal intensity which is from noise level of about 1 to about 2 nV/rtHz to about several tens mVpp. For example, the impedances of the piezoelectric transducers 26 are set in the range from 10 $\Omega$ to several hundreds $\Omega$.

The transmitting circuit 24 provides oscillation energy in a form of a transmitting signal to each of the piezoelectric transducers 26 via the corresponding signal line 27, necessary for an ultrasonic signal having a sufficient signal intensity to be transmitted from each of the piezoelectric transducers 26 to the subject and its reflective wave having a sufficient signal intensity to be received by each of the piezoelectric transducers 26.

The transmitting circuit 24 is formed so as to give a transmitting signal having an example amplitude of several hundreds Vpp at the maximum and a frequency in the range from 1 MHz to about more than a dozen MHz to each of the piezoelectric transducers 26.

Each of the receiving circuits 25 receives a reception signal outputted from each of the piezoelectric transducers 26 of the ultrasonic probe 22, converts it into a digital signal having a predetermined signal intensity, and feeds it to a control system (not shown) in a subsequent stage. Each of the receiving circuits 25 has a preamp 28 serving as an amplifier for amplifying the reception signal and an ADC (Analog-to-Digital Converter) 29 series-connected thereto in order from the ultrasonic probe 22, and the ADC 29 is connected to a control system (not shown) in accordance with intended use of the apparatus. After amplified by the preamp 28, the reception signal fed to the receiving circuit 25 is converted into a digital signal by the ADC 29 and fed to the control system (not shown) in the subsequent stage.

With an intention to miniaturize and simplify the ultrasonic diagnostic apparatus 20, the signal lines 27 extending from the plurality of piezoelectric transducers 26 are connected to the input of the single preamp 28 via an analogue switch 30 so that reception signals outputted from a plurality of the piezoelectric transducers 26 are processed by the common preamp 28, and the ADC 29, and a subsequent circuit.

As shown in Fig. 1, the ultrasonic diagnostic apparatus 20 has an example structure in which the signal lines 27 extending from two of the piezoelectric transducers 26 are respectively connected to the common preamp 28 via the analogue switch 30 and one of the two reception signal channels extending to the preamp 28 is selected by switching over the two lines with the aid of the analogue switch 30.

The analogue switch 30 has a voltage proof characteristic against an amplitude of at least smaller than that of a transmitting signal and greater than that of a reception signal. More particularly, the analogue switch 30 is of a type capable of resisting a small amplitude as that of the reception signal while being incapable of resisting a large amplitude as that of the transmitting signal, i.e., has a low-voltage-proof characteristic. The analogue switch 30 having such a characteristic is preferably composed of a CMOS (Complementary Metal-Oxide Semiconductor) switch, for example. The CMOS switch is disposed in an FET (Field-Effect Transistor) switch used for a P/N operation, has both satisfactory OFF-isolation and small offset, and is relatively inexpensive.

On the side of the analogue switch 30 close to the ultrasonic probe 22, each signal line 27 has a limiter 31 disposed thereon, serving as an amplitude-limiting circuit. The analogue switch 30 and the preamp 28 have a parallel tuning circuit 32 interposed therebetween.

Each limiter 31 has a characteristic that its impedance is large with respect to an amplitude of a transmitting signal to be fed from the transmitting circuit 24 to each of the piezoelectric transducers 26 of the ultrasonic probe 22 and small with respect to an amplitude of a reception signal to be fed from the piezoelectric transducer 26 to the preamp 28 in the receiving circuit 25. Transmitting signals having large amplitudes and some of reception signals having amplitudes exceeding a predetermined threshold are limited by the limiter 31 not to enter the analogue switch 30 and the preamp 28.

Fig. 2 is a circuit diagram showing an example circuit structure of the limiter 31 of the ultrasonic diagnostic apparatus 20 shown in Fig. 1.

As shown in Fig. 2, the limiter 31 includes circuit elements such as a plurality of diodes and resistances for example.

The limiter 31 includes an amplitude-dependent circuit 31a and a clamp circuit 31b. In combination with the clamp circuit 31b, the amplitude-dependent circuit 31a has large and small impedances with respect to transmitting and reception signals, respectively.

The amplitude-dependent circuit 31a is configured such that four diodes DH1, DH2, DL1, and DL2 are connected in a bridge pattern. More particularly, the two diodes DH1 and DH2 are reversely connected to each other on their anode sides and the remaining two diodes DL1 and DL2 are reversely connected to each other on their cathode sides. The cathodes and anodes of the two sets of the diodes DH1 and DH2 and the diodes DL1 and DL2, which are respectively reversely connected to each other, are connected to each other.

The four diodes DH1, DH2, DL1, DL2 of the amplitude-dependent circuit 31a are of a high-voltage-proof type capable of resisting an voltage corresponding to amplitude of a transmitting signal. Each of the diodes DH1, DH2, DL1, DL2 can be a planar diode or a schottky diode depending on an amplitude of a signal intended to be passed therethrough.

The diodes DH1 and DH2 have a first bias-current-feeding circuit 31c interposed therebetween and connected to the respective anodes. Likewise, the diodes DL1 and DL2 have a second bias-current-feeding circuit 31d interposed therebetween and connected to the respective cathodes. The first and second bias-current-feeding circuits 31c and 31 are configured such that direct current (DC) power supplies Vp,Vn have resistors R1,R2 connected in serial thereto respectively, and the power supplies Vp,Vn and the resistors R1, R2 have bypass capacitors C1, C2 interposed therebetween respectively, connected in parallel therewith.

As shown in Fig. 2, a resistor R1 of the first bias-current-feeding circuit 31c is connected to the line extending between the anodes of the diodes DH1 and DH2, and a resistor R2 of the second bias-current-feeding circuit 31d is connected to the line extending between the cathodes of the diodes DL1 and DL2.

The power supplies Vp,Vn of the first and second bias-current-feeding circuits 31c and 31d have example low DC voltages of +5 V and -5 V, respectively. Each of the first and second bias-current-feeding circuits 31c and 31d feeds a bias current to the amplitude-dependent circuit 31a, directed from its anode to cathode.

In other words, the amplitude-dependent circuit 31a has a supply voltage Vp,Vn applied thereon and a bias current fed thereto in a forward direction of the respective diodes DH1,DH2,DL1,DL2, wherein the intensity of the bias current is determined by the resistances R1, R2 of the respective resistors. By feeding the bias current to the amplitude-dependent circuit 31a, the ON resistance of each of the diodes DH1, DH2, DL1, DL2 is limited to a small value.

The cathode and the anode of the diodes DH1 and DL1 and the anode and the cathode of the diodes DH2 and DL2 respectively configure an input and an output of the amplitude-dependent circuit 31a. The amplitude-dependent circuit 31a has the clamp circuit 31b disposed on the output thereof.

The clamp circuit 31b is formed by two grounded diodes D3,D4 reversely connected in parallel. The two diodes D3,D4 constituting the clamp circuit 31b can be of a typical low-voltage-proof type. Each diode D3,D4 of the clamp circuit 31b may be likewise a planar diode or a schottky diode.

The parallel tuning circuit 32 interposed between the analogue switch 30 and the preamp 28 is mainly formed by an inductor and compensates for deterioration in NF of a signal having a predetermined frequency, caused by a capacitor.

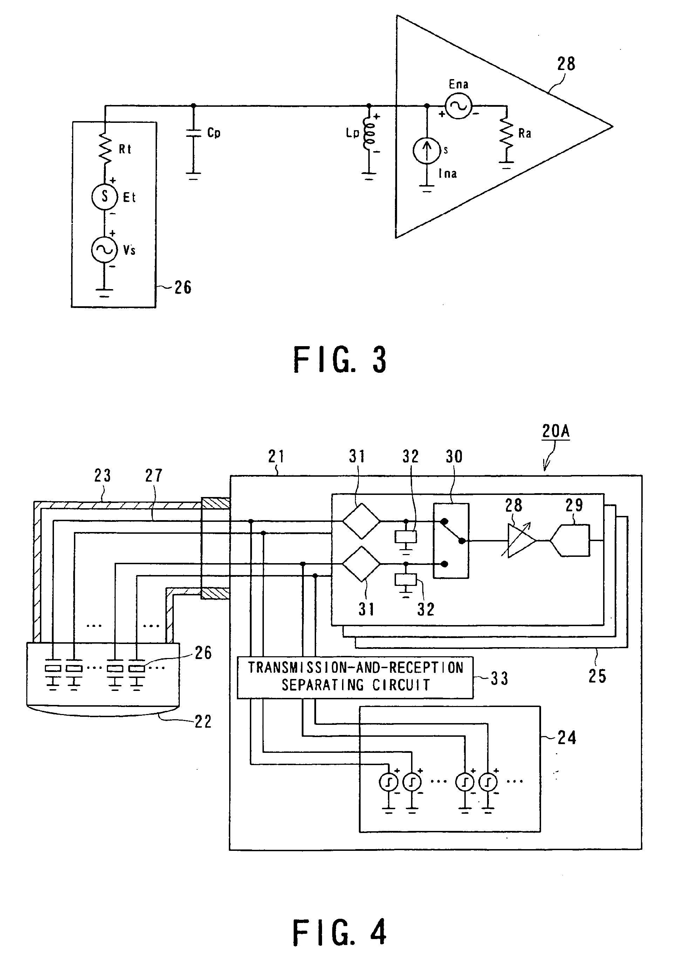

Fig. 3 is a diagram showing a simplified equivalent circuit model indicating a reception system including the receiving circuit 25 of the ultrasonic diagnostic apparatus 20 shown in Fig. 1.

A receiving system including the receiving circuits 25 has an equivalent circuit shown in Fig. 3, obtained from its simplified model. More particularly, the receiving system has an equivalent circuit in which, to an output of a reception signal having a voltage Vs, the source of a thermal noise Et of the piezoelectric transducer 26, a resistor having a resistance equivalent to an output impedance Rt of the piezoelectric transducer 26, the source of a voltage noise Ena of the preamp 28, and another resistor having a resistance equivalent to an input impedance Ra of the preamp 28 are connected in serial to the corresponding signal line 27; and at the same time, the capacitor having the capacitance Cp and an inductor having an inductance Lp of the parallel tuning circuit 32 are connected in parallel with the signal line 27 extending between the preamp 28 and the piezoelectric transducer 26,; and the source of a current noise Ina of the preamp 28 is connected in parallel with the signal line 27 extending in the preamp 28.

According to the equivalent circuit model of the receiving system, when an angular frequency of the reception signal is represented by ω, an input-equivalent noise Enin serving as the overall noise inputted in the preamp 28 of the receiving circuit 25 is given by expression (1).

$$\mathrm{Enin}^2 = \mathrm{Ena}^2 \cdot \mathrm{Rt}^2 \{ \omega \mathrm{Cp} - 1 / (\omega \mathrm{Lp}) \}^2 + \{ \mathrm{Ena}^2 + (\mathrm{Ina} \cdot \mathrm{Rt})^2 + \mathrm{Et}^2 \}$$

$$(1)$$

In other words, by setting the inductance Lp of the inductor, the parallel tuning circuit 32 compensates for deterioration in NF caused by the capacitor having the capacitance Cp, of the reception signal having an angular frequency ω serving as a variable in expression (1). The parallel tuning circuit 32 can be formed such that an inductor having an appropriate inductance Lp is selected from a plurality of inductors in accordance with a frequency ω where the deterioration in NF is intended to be compensated for.

Meanwhile, One part of the signal line 27 branched from the ultrasonic probe 22 and extending to the transmitting circuit 24 has a transmission-and-reception separating circuit 33 disposed thereon. The transmission-and-reception separating circuit 33 electrically separates the circuit lying on one part of the signal line 27 extending close to the receiving circuit 25 from that lying on the other part of the signal line 27 extending close to the transmitting circuit 24 and is formed such that, for example, a pair of diodes are reversely connected in parallel with the signal line 27. In this case, each diode has a sufficiently large impedance for a reception signal having an amplitude in the range from the noise level to several tens mVpp and is brought in an ON state for a transmitting signal having a large amplitude.

With the arrangement as described above, the transmission-and-reception separating circuit 33 has a structure in which, while each diode has a sufficiently large impedance for a reception signal, and the capacitor close to the transmitting circuit 24 affects on the reception signal in a substantially negligible degree, a transmitting signal passes through the diode and reaches the ultrasonic probe 22.

Other than the structure including such diodes, the transmission-and-reception separating circuit 33 may have a structure in which a circuit formed by short-circuiting the base of a bipolar transistor to a collector or another circuit formed by short-circuiting the gate and drain of an FET to each other is used instead of the diodes or may include a semiconductor switch controlled so as to be brought in an ON state only during transmission.

Next, the operation of the ultrasonic diagnostic apparatus 20 will be described.

In the limiter 31 of the receiving circuit 25, a forward bias current is previously fed to each of the diodes DH1, DH2, DL1, DL2 from the first and second bias-current-feeding circuits 31c and 31d. Hence, the ON resistance of each diode DH1, DH2, DL1, DL2 is limited to a small value. The analogue switch 30 is driven and a channel of a reception signal for leading it to the preamp 28 is selected.

Whereas, when a control signal is fed from the control system (not shown) to the transmitting circuit 24, an electrical pulse having an amplitude of several hundreds Vpp at several MHz to about more than a dozen MHz is generated in the transmitting circuit 24 so as to serve as a transmitting signal. The transmitting signal generated in the transmitting circuit 24 is lead to the transmission-and-reception separating circuit 33 via the signal line 27. Since the transmitting signal has a voltage higher than that where the diode constituting the transmission-and-reception separating circuit 33 is brought into the ON state and accordingly has a low impedance, the transmitting signal passes through the diode.

The transmitting signal passing through the transmission-and-reception separating circuit 33 reaches an intersection made by the two branched parts of the signal line 27: one close to the receiving circuit 25 and the other close to the transmitting circuit 24, and is transmitted to the ultrasonic probe 22 via a part of the signal line 27 commonly used for transmitting and reception signals.

If the limiters 31 are not disposed, there is a risk that the voltage of the transmitting signal is exerted on the receiving circuit 25. If the voltage of the transmitting signal is exerted on, for example, the low-voltage-proof analogue switch 30 and preamp 28 of the receiving circuit 25, these components would be broken.

In view of the above problem, since the transmitting signal has a large amplitude, by making large an impedance of each diode DH1,DH2,DL1,DL2 of each limiter 31 disposed close to the receiving circuit 25, the diode is brought into an OFF state. More particularly, when a forward voltage of each diode DH1, DH2, DL1, DL2 is represented by ± VF, the voltage of the transmitting signal is as large as out of the range ± VF. Hence, since the receiving circuit 25 is clamped by each diode D3,D4 of the clamp circuit 31b, when the transmitting signal is inputted in the amplitude-dependent circuit 31a, an anode potential of each of the diodes DH1 and DH2 rises up to only about + 2VF. Likewise, a cathode potential of each of the diodes DL1 and DL2 falls down to only about - 2VF.

With this, when the transmitting signal causes the cathode potential of the diode DH1 to rise and eventually exceed + VF, a sufficient forward voltage is not applied on the diode DH1. Accordingly, the impedance of the diode DH1 rises rapidly. At the same time, since the cathode potential of the diode DL2 also rises, a sufficient forward voltage is not applied on the diode DL2. Accordingly, the impedance of the diode DL2 also rises rapidly.

On the contrary, when the transmitting signal causes the cathode potential of each of the diodes DH1 and DL2 to fall and eventually be less than - VF, a sufficient forward voltage is not applied on each of the diodes DL1 and DH2. Accordingly, the impedances of the diodes DL1 and DH2 rise rapidly.

As a result, the transmitting signal is attenuated without directly entering the analogue switch 30 and the preamp 28 of the receiving circuit 25, thereby preventing the analogue switch 30 and the preamp 28 from being broken. In other words, even when a signal like the transmitting signal, having a large amplitude exceeding + VF, is inputted in the receiving circuit 25, the corresponding limiter 31 limits the amplitude of the transmitting signal to about a clamp voltage.

Thus, the transmitting signal introduced to the ultrasonic probe 22 without adversely affecting on the receiving circuit 25 is applied on the corresponding piezoelectric transducer 26. The piezoelectric transducer 26 converts an electric pulse, received from the transmitting circuit 24 and serving as the transmitting signal, into an ultrasonic pulse and transmits it into a subject (not shown). Then, its reflective wave is generated in the subject. The reflective wave generated in the subject is received by the piezoelectric transducer 26 and converted into an electrical signal.

The electrical signal of the reflective wave obtained in the piezoelectric transducer 26 is turned into a reception signal having an amplitude of several tens mVpp and transmitted to the receiving circuit 25 via the signal line 27. On this occasion, since the reception signal has an amplitude in the range from the noise level to several tens mVpp, each of the diodes constituting the transmission-and-reception separating circuit 33 has a sufficiently high impedance. Hence, a part of a corresponding transmission line close to the transmitting circuit 24 is electrically separated from the other part of the transmission line close to the receiving circuit 25, whereby an influence of the capacitance exerted on the reception signal, of the capacitor close to the transmitting circuit 24 is satisfactorily reduced.

The transmitting signal is introduced in the corresponding receiving circuit 25 and reaches the input of the amplitude-dependent circuit 31a of the corresponding limiter 31.

On this occasion, since a forward bias current is fed from each of the first and second bias-current-feeding circuits 31c and 31d so as to make the ON resistance of each diode DH1, DH2, DL1, DL2 sufficiently small by the action of the corresponding resistor RH,RL, the reception signal reached the input of the amplitude-dependent circuit 31a is lead from the output of the amplitude-dependent circuit 31a to the analogue switch 30 via the respective diodes DH1,DH2,DL1,DL2 of the amplitude-dependent circuit 31a, each having a sufficiently small ON resistance.

In other words, since the reception signal has a small voltage having an amplitude within the forward voltage of $\pm$ VF of each diode DH1, DH2, DL1, DL2, each of the diodes DH1, DH2, DL1, DL2 allows the reception signal to pass therethrough to the output of the amplitude-dependent circuit 31a while maintaining the forward bias state. While the reception signal passed through the diodes DH1, DH2, DL1, DL2 is introduced to the clamp circuit 31b, the impedance of each diode D3,D4 of the clamp circuit 31b is sufficiently large for the reception signal having the voltage within $\pm$ VF, thereby resulting in no influence on the reception signal.

Accordingly, the reception signal having a small amplitude and traveling on a channel selected by the analogue switch 30 is introduced to the low-voltage-proof analogue switch 30 via the corresponding the limiter 31. In addition, the reception signal is introduced to the preamp 28 via the analogue switch 30, and its deterioration in NF caused by the capacitor is compensated for by the parallel tuning circuit 32. In other words, with the parallel tuning circuit 32, the inductor having the inductance Lp in accordance with an angular frequency ω of the reception signal is set at a value computed on the basis of expression (1) so as to compensate for the deterioration in NF caused by the capacitor having the capacitance Cp.

The reception signal, whose deterioration in NF has been compensated for by the parallel tuning circuit 32 having the above-described structure, is introduced to the preamp 28 which amplifies the reception signal introduced and the reception signal amplified is then fed to the ADC 29. The reception signal is converted into a digital signal by the ADC 29 and fed to the control system (not shown) in the subsequent stage. The reception signal is utilized as original data for obtaining tomography-image information and blood flow information in the control system.

That is, the ultrasonic diagnostic apparatus 20 as described above has the limiters 31, each having a characteristic that its impedance becomes large for a signal like a transmitting signal having a large amplitude and small for a signal like a reception signal having a small amplitude, disposed on the input side of the preamp 28 of the receiving circuit 25; and, at the same time, the low-voltage-proof analogue switch 30 inserted between the limiters 31 and the preamp 28 so as to switch over transmitting signals outputted from the plurality of piezoelectric transducers 26 and introduce them to the preamp 28.

With this structure, according to the ultrasonic diagnostic apparatus 20, the number of the circuits downstream of the preamp 28 can be made smaller than the number of the piezoelectric transducers 26. In addition, if the ultrasonic diagnostic apparatus 20 is formed such that channels for transmitting signals are also switched over by switches on the side of the transmitting circuit 24, the number of channels for transmitting signals and that for reception signals are arbitrarily selected independently from each other. Also, commonality of circuit elements of the receiving circuits 25 and the transmitting circuit 24 corresponding to the plurality of piezoelectric transducers 26 is achieved, thereby reducing the size and the manufacturing cost of the ultrasonic diagnostic apparatus 20.

Since the ultrasonic diagnostic apparatus 20 is formed such that reception signals are switched over by the analogue switch 30 after limitation of their amplitudes with the aid of the limiters 31, the analogue switch 30 can be easily selected from those of a low-voltage proof type at least capable of resisting a reception signal, instead of a high-voltage proof type capable of resisting a transmitting signal. With the low-voltage-proof analogue switch 30 as described above for switching over reception signals, the ultrasonic diagnostic apparatus 20 achieves the following advantages.

The first advantage is a smaller input-output capacitance of a reception signal entering the analogue switch 30 than when a known high-voltage proof switch is used. This leads to reducing deterioration in an S/N of the reception signal. In recent years, thanks to an advancement in a bus-switching technology applicable to a high speed bus, as the analogue switch 30 of a low-voltage proof type, a CMOS analogue switch having a single power supply + 5V, a low capacitance because of a rail-to-rail configuration driven by a $\pm$ 3.3 V power supply, and a low ON resistance has been developed.

The second advantage is a smaller ON resistance of the analogue switch 30 than when a known high-voltage proof switch is used. Since it is sufficient that the analogue switch 30 allows a reception signal, which passed through the corresponding limiter 31, having a voltage of about 1.4 Vpp at most to pass therethrough, the analogue switch 30 is not required to have a high-voltage proof characteristic. Hence, a plenty of CMOS analogue switches, each having low ON resistance not higher than 5 $\Omega$, are readily available as the CMOS analogue switches 30. Additionally, decrease in the ON resistance of the analogue switch 30 leads to reduction in deterioration in S/N of the reception signal.

The third advantage is more improved OFF-isolation (a high OFF-resistance property) of the analogue switch 30 than when a known diode switch is used. Since each of the receiving circuits 25 has a two-stage isolation-configuration in which the amplitudes of reception signals are limited by the limiters 31 and subsequently, their channels are switched over by the analogue switch 30 such as a CMOS switch, transmitting signals do not suffer from direct cross-talk with the reception signals, thereby achieving satisfactory off-isolation. In addition, when a CMOS switch is used as the analogue switch 30, the level of off-isolation of the CMOS switch is as high as about 60 dB. Hence, even in the unlikely event that a transmitting signal is fed to the piezoelectric transducer 26 having no channel selected for the corresponding reception signal, archifact is unlikely to generate on an ultrasonic image.

As a result of achieving such satisfactory off isolation, since the piezoelectric transducer 26 for use in transmitting an ultrasonic pulse and the piezoelectric transducer 26 for use in receiving its reflective wave can be arbitrarily set independently from each other, the transmitting aperture of the ultrasonic probe 22 can be independently set free from limitation of the receiving aperture of the same. For example, by feeding transmitting signals from the transmitting circuit 24 to all piezoelectric transducers 26, and at the same time, by switching over channels of reception signals in the receiving circuit 25 with the aid of the analogue switch 30, the number of circuit elements such as the preamp 28 and the ADC 29 can be reduced. With this structure, not only the ultrasonic diagnostic apparatus 20 can be made at low cost without an expensive high-voltage proof switch but also the possible acoustic-field design features can be increased.

The fourth advantage is a shorter switching time than when a known high-voltage proof switch is used. This achieved by switching over channels of reception signals with the aid of the analogue switch 30. The switching time of the low-voltage-proof analogue switch 30 is as short as 30 $\mu$sec. In particular, when the CMOS analogue switch 30 having a shift resistor built therein is used, channels of reception signals can be switched over by serial control lines, thereby improving the packaging property. In the meantime, a diode switch as in the known ultrasonic diagnostic apparatus 1 can be also formed by changing supply voltages Vp and Vn of the limiter 31 shown in Fig. 2 from Vp $\geq$ Vn to Vp $\leq$ Vn. However, a switching time of the diode switch is longer than that of the analogue switch 30, it is important not to change over the supply voltages Vp and Vn from each other, i.e., not to form the limiter 31 so as to serve as a diode switch.

The fifth advantage is such that, in the ultrasonic diagnostic apparatus 20, the position of an ON-resistor of the analogue switch 30 is located closer to the preamp 28 than that of the capacitance load of the capacitor of the receiving system, resulting in an advantageous arrangement from the viewpoint of NF. In other words, an increase in the impedance of the side of the piezoelectric transducer 26 is equivalent to an increase in a resistance Rt in expression (1) obtained by the simplified model of the receiving system.

When the ON-resistor of the analogue switch 30 is located close to the preamp 28, a thermal resistance caused by the ON-resistor of the analogue switch 30 effects, in a form of the sum of squares, on a noise in the preamp 28, i.e., is equivalent to an increase in a voltage noise Ena of the preamp 28 in expression (1). When it is presumed that both the preamp 28 and the piezoelectric transducer 26 have a noise of about $1 nV/(Hz)^{1/2}$ , this noise is equivalent to a thermal noise of a resistor having a resistance of 60 $\Omega$. Since the resistance of the ON-resistor of the analogue switch 30 is as small as not greater than about 5 $\Omega$, the sum of squares is about 4% of the foregoing noise, substantially resulting in no influence.

On the contrary, since an increase in the output impedance Rt of the piezoelectric transducer 26 takes effect in a form of a simple sum, its effect is as large as about 8%. Hence, it is understood that locating the position of the ON-resistor of the analogue switch 30 closer to the preamp 28 than that of the capacitance load of the capacitor of the receiving system is advantageous from the viewpoint of NF.

When the condition: $\omega Cp - 1/(\omega Lp) = 0$, is satisfied in expression (1), i.e., when deterioration in NF caused by the capacitance Cp is nulled by setting the inductance LP of the inductor of the parallel tuning circuit 32, the deterioration in NF caused by the capacitance Cp does not ideally exist. However, since the inductance Lp of the inductor to be tuned varies depending on the frequencies $\omega$ of reception signals, when the frequencies $\omega$ of the reception signals has a certain bandwidth, the inductor cannot be tuned on the reception signals having frequencies except for a certain frequency. Accordingly, it is better to arrange the analogue switch 30 close to the preamp 28.

In such a sense, by arranging the analogue switch 30 close to the preamp 28, the ultrasonic diagnostic apparatus 20 is advantageous from the viewpoint of NF even in the frequencies where the tuning does not work.

The sixth advantage is a very compact structure. By employing the analogue switch 30, a smaller package (a higher density package) of the receiving circuit 25 of the ultrasonic diagnostic apparatus 20 can be achieved than when a known high-voltage switch is used. Because of a low-voltage proof type, the analogue switch 30 is not required to have a voltage proof characteristic like the high-voltage proof switch, thereby achieving a very compact structure of the analogue switch 30 itself.

Furthermore, since the analogue switch 30 does not require a high-voltage power supply for driving itself, the number of types of power supplies can be reduced and circuits such as a power-supply supervisory circuit for supervising the high-voltage power supply can be eliminated. In addition, while the receiving circuit 25 would require a large packaging area because of a large number of peripheral components disposed around the preamp 28 and the ADC 29 without the analogue switch 30, thanks to the analogue switch 30, circuit elements downstream of the preamp 28 can be reduced, and the packaging area of the receiving circuit 25 can be thus drastically reduced, thereby achieving the more compact ultrasonic diagnostic apparatus 20.

The seventh advantage is a lower manufacturing cost of the ultrasonic diagnostic apparatus 20 by including the analogue switch 30 having a low-voltage proof characteristic than that when a known high-voltage proof switch is used. Since the amplitude of a reception signal is limited to about 1.4 Vpp by the limiter 31, (to about 0.7 Vpp in the case of schottky diodes constituting the limiter 31), the analogue switch 30 can be of a low-voltage type driven by a power supply outputting power necessary for allowing the reception signal to pass therethrough.

For example, even taking account overshoot into consideration, a power supply having a voltage such as $\pm 3.3$ V or $\pm 5$ V, or a single power supply having a voltage such as 5 V or 3.3 V is satisfactory, whereby the analogue switch 30 can be selected from typical ones widely available in the market. Hence, the analogue switch 30 itself is purchased at a very low price. In addition, with the analogue switch 30, the number of circuit elements, such as the preamp 28 and the ADC 29, sharing a major part of the manufacturing cost of the receiving circuit 25 can be reduced, thereby reducing the manufacturing cost of the ultrasonic diagnostic apparatus 20.

In summary, in the ultrasonic diagnostic apparatus 20, since reception signals whose high voltage components are eliminated by the limiters 31 are introduced to and switched over by the low-voltage-proof analogue switch 30, switches such as the diode switches 8B or the high-voltage-proof switches 8A and 12 included in the known ultrasonic diagnostic apparatuses 1 and 1A are not needed. Accordingly, in the ultrasonic diagnostic apparatus 20, the receiving circuit 25 can be formed by the low-voltage-proof analogue switch 30 having a smaller ON resistance and input-output capacitance and, at the same time, being smaller and less expensive than a high-voltage proof switch, thereby reducing S/N deterioration of the reception signal, caused by the switch.

Fig. 4 is a block diagram showing an ultrasonic diagnostic apparatus according to a second embodiment of the present invention.

In the ultrasonic diagnostic apparatus 20A shown in fig. 4, the arrangement and the number of parallel tuning circuits 32 are different from those of the ultrasonic diagnostic apparatus 20 shown in fig. 1. Other constructions and operations of the ultrasonic diagnostic apparatus 20A are not different from those of the ultrasonic diagnostic apparatus 20 shown in fig. 1 substantially. Therefore, same number is attached to a same component as that of the ultrasonic diagnostic apparatus 20 and explanation thereof is omitted.

Each of the receiving circuits 25 of the ultrasonic diagnostic apparatus 20A has a structure in which the parallel tuning circuits 32 are individually disposed on the respective signal lines 27 extending between the analogue switch 30 and the limiters 31. Accordingly, in the receiving circuit 25 of the ultrasonic diagnostic apparatus 20A, with the inductor having the inductance Lp, of the corresponding parallel tuning circuit 32, a reception signal is tuned in the corresponding channel before entering the analogue switch 30, and its NF deterioration is compensated for by the capacitor having the capacitance Cp.

Hence, in the same fashion as in the ultrasonic diagnostic apparatus 20 shown in Fig. 1, the ultrasonic diagnostic apparatus 20A does not require switches such as the diode switches 8 or the high-voltage-proof switches 12 included in the known ultrasonic diagnostic apparatuses 1 and 1A. Accordingly, the receiving circuit 25 can be configured by the low-voltage-proof analogue switch 30 having a small ON resistance and input-output capacitance and, at the same time, being small and less expensive, thereby reducing S/N deterioration of the reception signals, caused by the switch.

Furthermore, in the same fashion as in the ultrasonic diagnostic apparatus 20 shown in Fig. 1, when the analogue switch 30 is arranged closer to the piezoelectric transducers 26 than the inductors of the parallel tuning circuits 32, each having the inductance Lp, a tuning is unlikely to effect on the capacitor having the capacitance Cp and lying closer to the piezoelectric transducer 26 than the analogue switch 30. However, since the ON-resistor of the analogue switch 30 is small, the arrangement of the ultrasonic diagnostic apparatus 20 is advantageous from the viewpoint of NF in a wider range of frequencies where the tuning does not effect. In addition, combining them into one unit can reduce the number of the overall parallel tuning circuits 32.

Whereas, when the parallel tuning circuits 32 are arranged closer to the limiters 31 than the analogue switch 30 as in the ultrasonic diagnostic apparatus 20A shown in Fig. 4, since the analogue switch 30 does not lie between the capacitor having the capacitance Cp and the parallel tuning circuits 32, the tuning is likely to work in the case of making an issue of a sensitivity in a narrow bandwidth, thereby being advantageous from the viewpoint of S/N, in the vicinity of the frequency where the tuning works.

Furthermore, even though the number of the parallel tuning circuits 32 cannot be reduced, since the parallel tuning circuit 32 is less expensive than the circuit elements such as the preamp 28 and the ADC 29, and the number of channels of reception signals downstream of the preamp 28 can be reduced by inserting the analogue switch 30 in the receiving circuit 25, the structure of the ultrasonic diagnostic apparatus 20A shown in Fig. 4 is substantially effective.

**Claims**

1.  An ultrasonic diagnostic apparatus comprising:

    a plurality of piezoelectric transducers (26) adapted for transmitting ultrasonic pulses to a subject and receiving reflected waves generated due to the ultrasonic pulses; and
    a transmitting circuit (24) adapted for supplying transmission signals to drive the piezoelectric transducers (26) respectively;

    **characterized by**

    a plurality of receiving circuits (25), each adapted for receiving reception signals from an individual group of the piezoelectric transducers (26) respectively, each receiving circuit (25) including:

    an amplifier (28) adapted for amplifying the reception signals;
    a plurality of amplitude limiting circuits (31) having an impedance which is high to amplitudes of the transmission signals and low to amplitudes of the reception signals; and
    an analog switch (30) having a voltage proof characteristic over an amplitude which is lower than the amplitudes of the transmission signals and higher than the amplitudes of the reception signals, the analog switch (30) being adapted for switching channels which lead the reception signals passing through the amplitude limiting circuits (31) to the amplifier (28) such that the reception signal from one of the piezoelectric transducers (26) in the individual group of piezoelectric transducers (26) is supplied to the amplifier (28).

2.  An ultrasonic diagnostic apparatus according to claim 1, wherein the analog switch (30) includes a CMOS switch.

3.  An ultrasonic diagnostic apparatus according to claim 1, further comprising a parallel tuning circuit (32) between the analog switch (30) and the amplifier (28).

4.  An ultrasonic diagnostic apparatus according to claim 1, further comprising a parallel tuning circuit (32) in the piezoelectric transducers side rather than the analog switch (30).

**Patentansprüche**

1.  Ultraschalldiagnosevorrichtung mit

    einer Mehrzahl von piezoelektrischen Transducern (26), die angepasst sind zum Übertragen von Ultraschallimpulsen an ein Subjekt und zum Empfangen reflektierter Wellen, die aufgrund der Ultraschallimpulse erzeugt werden; und
    einer, Sendeschaltung (24), die angepasst ist zum Liefern von Sendesignalen zur jeweiligen Ansteuerung der piezoelektrischen Transducer (26);
**gekennzeichnet durch**
eine Mehrzahl von Empfangsschaltungen (25), die jeweils angepasst sind zum Empfangen von Empfangssignalen von einer individuellen Gruppe der piezoelektrischen Tansducer (26), wobei jede Empfangsschaltung (25) aufweist:

einen Verstärker (28), der angepasst ist zum Verstärken der Empfangssignale;
eine Mehrzahl von Amplitudenbegrenzungsschaltungen (31), die eine Impedanz aufweisen, die für Amplituden der Sendesignale groß und für Amplituden der Empfangssignale klein ist; und
einen analogen Schalter (30), der eine Spannungsdurchschlagscharakteristik über einer Amplitude aufweist, die kleiner als die Amplituden der Sendesignale und größer als die Amplitude der Empfangssignale ist, wobei der analoge Schalter (30) angepasst ist zum Schalten von Kanälen, die die Empfangssignale, die **durch** die Amplitudenbegrenzungsschaltungen (31) verlaufen, zu dem Verstärker (28) derart führen, dass das Empfangssignal von einem der piezoelektrischen Transducern (26) in der individuellen Gruppe von piezoelektrischen Transducern (26) an den Verstärker (28) geliefert wird.

2. Ultraschalldiagnosevorrichtung nach Anspruch 1, bei der der analoge Schalter (30) einen CMOS-Schalter aufweist.

3. Ultraschalldiagnosevorrichtung nach Anspruch 1, ferner mit einer parallelen Einstellungsschaltung (32) zwischen dem analogen Schalter (30) und dem Verstärker (28).

4. Ultraschalldiagnosevorrichtung nach Anspruch 1, ferner mit einer parallelen Einstellungsschaltung (32) auf der piezoelektrischen Transducerseite anstelle des analogen Schalters (30).

## Revendications

1. Appareil de diagnostic à ultrasons comprenant :

une pluralité de transducteurs piézoélectriques (26) adapté à la transmission d'impulsions ultrasonores à un patient et à la réception d'ondes réfléchies générées à la suite des impulsions ultrasonores ; et
un circuit de transmission (24) adapté pour fournir des signaux de transmission pour commander les transducteurs piézoélectriques (26), respectivement ;

**caractérisé par**

une pluralité de circuits de réception (25), chacun adapté pour recevoir des signaux de réception d'un groupe individuel des transducteurs piézoélectriques (26), respectivement, chaque circuit de réception (25) comprenant :

un amplificateur (28) adapté pour amplifier les signaux de réception ;
une pluralité de circuits de limitation d'amplitude (31) ayant une impédance qui est élevée par rapport aux amplitudes des signaux de transmission et basse par rapport aux amplitudes des signaux de réception ; et
un commutateur analogique (30) ayant une caractéristique de tenue à la tension sur une amplitude qui est inférieure aux amplitudes des signaux de transmission et supérieure aux amplitudes des signaux de réception, le commutateur analogique (30) étant adapté pour commuter des canaux qui conduisent les signaux de réception traversant les circuits de limitation d'amplitude (31) jusqu'à l'amplificateur (28) de sorte que le signal de réception de l'un des transducteurs piézoélectriques (26) du groupe individuel de transducteurs piézoélectriques (26) soit délivré à l'amplificateur (28).

2. Appareil de diagnostic à ultrasons selon la revendication 1, dans lequel le commutateur analogique (30) comprend un commutateur CMOS.

3. Appareil de diagnostic à ultrasons selon la revendication 1, comprenant en outre un circuit de réglage parallèle (32) entre le commutateur analogique (30) et l'amplificateur (28).

4. Appareil de diagnostic à ultrasons selon la revendication 1, comprenant en outre un circuit de réglage parallèle (32) du côté des transducteurs piézoélectriques plutôt que le commutateur analogique (30).

FIG. 1

FIG. 2

EP 1 640 744 B1

FIG. 3

FIG. 4

14

EP 1 640 744 B1

PRIOR ART
FIG. 5

PRIOR ART
FIG. 6

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8131440 A
- US 4253338 A